# EUROPÄISCHE PATENTSCHRIFT

(11) **EP 1 421 748 B1**
(45) Veröffentlichungstag und Bekanntmachung des Hinweises auf die Patenterteilung: **02.11.2006**
(21) Anmeldenummer: 02754537.5
(22) Anmeldetag: 16.08.2002
(51) Int. Cl.: H04L 12/56, H04L 12/28

(54) **EIN VERFAHREN ZUM VERBINDUNGSAUFBAU UND EIN KURZSTRECKENFUNKSENDE-EMPFANGSGERÄT**
METHOD FOR ESTABLISHING A CONNECTION AND SHORT-RANGE RADIO TRANSCEIVER UNIT
PROCEDE D'ETABLISSEMENT D'UNE COMMUNICATION ET APPAREIL RADIO EMETTEUR/RECEPTEUR A COURTE DISTANCE

(30) Priorität: 30.08.2001 DE 10142496
(43) Veröffentlichungstag der Anmeldung: 26.05.2004
(73) Patentinhaber: SIEMENS AKTIENGESELLSCHAFT, 80333 München (DE)
(72) Erfinder: KAMPERSCHROER, Erich, 46499 Hamminkeln (DE); SCHEIDEMANN, Ernst-Wilhelm, 46414 Rhede (DE); SCHWARK, Uwe, 46399 Bocholt (DE)
(86) Internationale Anmeldenummer: PCT/DE2002/003014
(87) Internationale Veröffentlichungsnummer: WO 2003/028312

(56) Entgegenhaltungen:
- EP-A- 1 133 119
- WO-A-99/67898
- WO-A-02/052753
- WO-A-02/103988

## Beschreibung

Die Erfindung betrifft ein Verfahren zum Verbindungsaufbau gemäß dem Oberbegriff des Anspruchs 1 und ein Kurzstreckenfunksendegerät/-empfangsgerät gemäß dem Oberbegriff des Anspruchs 10.

Es ist bekannt, dass in Funktelekommunikationssystemen Kurzstreckenfunksendegeräte/-empfangsgeräte zum Einsatz kommen, die sich in der für eine Funkkommunikation eingestellten Sendeleistung unterscheiden.

Solche Kurzstreckenfunksendegeräte/-empfangsgeräte werden in Klassen eingestuft. Beispielsweise werden bei gemäß dem Kurzstreckenfunkstandard "Bluetooth" ausgestalteten Kurzstreckenfunksendegeräten/-empfangsgeräten (BT-Device) sich hinsichtlich ihrer Sendeleistung unterscheidende Kurzstreckenfunksendegeräte/-empfangsgeräte in 3 Leistungsklassen eingestuft.

Geräte unterschiedlicher Leistungsstufen können ohne Weiteres eine Kommunikationsverbindung eingehen. Dazu untersucht ein BT-Device bevor es den Aufbau einer Kommunikationsverbindung startet seine Umgebung, d.h. den Funkversorgungsbereich (Sendebereich), der durch die voreingestellte Sendeleistung, von einem Funkmodul des BT-Devices versorgt wird.

Bei dieser mit "Inquiry" (vgl. "Bluetooth Specification", Version 1B, Part B 10.7.1) bezeichneten Prozedur erfasst das BT-Device, gemäß dem Bluetooth-Standard an alle BT-Devices vergebenen eineindeutigen, (Bluetooth)-Adressen (vgl. "Bluetooth Specification", Version 1B, Part B 13.1) derjenigen BT-Devices, die sich im Sendebereich befinden.

Nach Abschluss der "Inquiry"-Prozedur, kann mit den ermittelten Bluetooth-Adressen gezielt eine Funkverbindung zu einem der ermittelten BT-Devices erfolgen. Diese Prozedur ist gemäß Bluetooth-Standard als "Paging"-Prozedur (vgl. "Bluetooth Specification", Version 1B, Part B 9.5) bekannt, wobei mit einer gemäß Bluetooth-Standard als "Power Control" (vgl. "Bluetooth Specification", Version 1B, Part C 13.8) bezeichneten Prozedur bei bestehender Funkverbindung eine Nachregelung, d.h. Einstellen eines neuen Sendeleistungswertes, erfolgt, wenn einer der an der Funkverbindung beteiligen Kommunikationspartner eine eine Qualitätsänderung signalisierende Meldung sendet.

Nachteilig bei solchen Funktelekommunikationssystemen ist, dass ein eine Verbindung initiierendes Kurzstreckenfunksendegerät/-empfangsgerät, welches mit einer hohen Sendeleistung sendet, Empfangsverstärker von sich in der Nähe befindenden Kurzstreckenfunksendegeräten/-empfangsgeräten übersteuert, so dass kein Verbindungsaufbau zu den nahe gelegenen Kurzstreckenfunksendegeräten/-empfangsgeräten möglich ist.

Falls das Kurzstreckenfunksendegerät/-empfangsgerät mit niedriger Sendeleistung sendet, wie beispielsweise gemäß der Bluetooth-Spezifikation empfohlen, werden entferntere Kurzstreckenfunksendegeräte/-empfangsgeräte nicht erreicht, so dass mit ihnen kein Verbindungsaufbau möglich ist.

Aus der nachveröffentlichten Druckschrift EP 1 133 119 A2 ist ein Kurzstrecken-Funktelekommunikationssystem bekannt, bei dem ein als Personal Computer mit einer Bluetooth-Funkschnittstelle ausgebildetes Kurzstreckenfunkgerät, das eine Funkverbindung zu einem weiteren als GSM-Mobiltelefon mit einer Bluetooth-Funkschnittstelle ausgebildeten Kurzstreckenfunkgerät aufbaut, den Nachbarschaftszustand zu diesem weiteren Kurzstreckenfunkgerät basierend auf der bestehenden Funkverbindung zu diesem Gerät bestimmt und in Abhängigkeit von dem bestimmten Nachbarschaftszustand eine Konfiguration bzw.

Anpassung von Diensten vornimmt. Als Nachbarschaftszustände werden dabei insbesondere die Zustände "Nah" und "Fern" verwendet.

Die der Erfindung zugrunde liegende Aufgabe ist es, ein Verfahren zum Verbindungsaufbau und ein Kurzstreckenfunksendegerät/-empfangsgerät anzugeben, welche die Rate erfolgreicher Verbindungsversuche erhöhen.

Diese Aufgabe wird ausgehend von dem im Oberbegriff des Patentanspruches 1 definierten Verfahren durch die im Kennzeichen des Patentanspruches 1 angegebenen Merkmale sowie ausgehend von dem im Oberbegriff des Patentanspruches 10 definierten Kurzstreckenfunksendegerät/-empfangsgerät durch die im Kennzeichen des Patentanspruches 10 angegebenen Merkmale gelöst.

Bei dem erfindungsgemäßen Verfahren zum Verbindungsaufbau in einem Kurzstreckenfunkssystem mit mindestens einem ersten Kurzstreckenfunksendegerät/-empfangsgerät, bei dem der Wert einer Sendeleistung variierbar ist, erfolgt eine Initialisierung eines ersten Sendeleistungswertes. Anschließend erfolgt ein Suchen nach einem zweiten Kurzstreckenfunksendegerät/-empfangsgerät in einem durch den ersten Sendeleistungswert bestimmten Funkversorgungsbereich, wobei bei Auffinden eines zweiten Kurzstreckenfunksendegeräts/-empfangsgeräts ein Speichern einer das zweite Kurzstreckenfunksendegerät/-empfangsgerät kennzeichnenden Information in Verbindung mit dem ersten Sendeleistungswert durchgeführt wird. Im Anschluss hieran wird ein Vergleich des ersten Sendeleistungswertes mit einem zweiten Sendeleistungswert, der sich von dem ersten Sendeleistungswert unterscheidet, durchgeführt, wobei bei Gleichheit die Suche beendet wird und bei Ungleichheit die Suche mit einem geänderten ersten Sendeleistungswert wiederholt wird.

Durch das mehrfache Suchen eines zweiten Kurzstreckenfunksendegeräts/-empfangsgeräts mit jeweils einem anderen Sendeleistungswert wird gewährleistet, dass nahezu alle zweiten Kurzstreckenfunksendegeräte/-empfangsgeräte, die sich in einem vom ersten Kurzstreckenfunksendegerät/-empfangsgerät gewährleisteten Funkversorgungsbereich befinden, ermittelt werden. Zudem wird durch das Speichern einer die gefundenen zweiten Kurzstreckenfunksendegeräte/-empfangsgeräte kennzeichnenden in Verbindung mit einer auf den zum Auffinden genutzten ersten Sendeleistungswert bezogenen Information erreicht, dass ein Verbindungsaufbau zu einem bestimmten zweiten Kurzstreckenfunksendegerät/-empfangsgerät mit einem Sendeleistungswert erfolgt, der eine hohe Wahrscheinlichkeit für ein Gelingen des Verbindungsaufbaus gewährleistet.

Sind die möglichen Werte der Sendeleistung durch ein abgeschlossenes Intervall begrenzt, ist ein Terminieren des Verfahrens absehbar. Zudem lässt sich das Verfahren in Kommunikationssystemen, die einen begrenzten Wertebereich für die Sendeleistung vorschreiben bzw. zulassen, einfach implementieren.

Wird mit der Initialisierung als erster Sendeleistungswert ein niedriger Wert des Intervalls, insbesondere unterer Grenzwert des Intervalls, und als zweiter Sendeleistungswert ein hoher Wert des Intervalls, insbesondere oberer Grenzwert des Intervalls, eingestellt, wobei bei Ungleichheit der erste Sendeleistungswert inkrementiert wird, lassen sich dem ersten Kurzstreckenfunksendegerät/-empfangsgerät nächstgelegene zweite Kurzstreckenfunksendegeräte/-empfangsgeräte schnell ermitteln, falls beispielsweise das Auffinden bzw. Kommunizieren mit nächstgelegenen Kurzstreckenfunksendegeräten/-empfangsgeräten bevorzugt wird.

Wird mit der Initialisierung als erster Sendeleistungswert ein hoher Wert des Intervalls, insbesondere unterer Grenzwert, und als zweiter Sendeleistungswert ein niedriger Wert des Intervalls, insbesondere oberer Grenzwert des Intervalls, eingestellt, wobei bei Ungleichheit der erste Sendeleistungswert dekrementiert wird, lassen sich von dem ersten Kurzstreckenfunksendegerät/-empfangsgerät entfernteste zweite Kurzstreckenfunksendegeräte/-empfangsgeräte schnell ermitteln, falls beispielsweise das Auffinden bzw. Kommunizieren mit den entferntesten Kurzstreckenfunksendegeräten/-empfangsgeräten bevorzugt wird.

Durch Änderung der ersten Sendeleistung mit einer diskreten Schrittweite lässt sich das Verfahren einfach in digitalen Systemen implementieren.

In Kurzstreckenfunksystemen, insbesondere einem nach Bluetooth funktionierenden System, werden mit Sendeleistungsstufen, deren Wert in einem Bereich von 2dBm bis 8dBm liegen, gute Ergebnisse bei Variationen des Sendeleistungswerts erzielt. Gleiches gilt für sich hieraus ergebende diskrete Schrittweite.

Das Verfahren lässt sich besonders einfach implementieren und ist damit kostengünstig, wenn das Kurzstreckenfunksystem nach dem "Bluetooth-Standard" funktioniert.

Dieser Vorteil wird ebenso erzielt, wenn die Suche nach dem gemäß "Bluetooth-Standard" definierten "Inquiry"-Verfahren funktioniert und/oder der Verbindungsaufbau nach dem gemäß "Bluetooth-Standard" definierten "Paging"-Verfahren funktioniert.

Das erfindungsgemäße Kurzstreckenfunksendegerät/-empfangsgerät weist Mittel zur Initialisierung eines ersten Sendeleistungswertes, sowie Mittel zum Suchen nach einem zweiten Kurzstreckenfunksendegerät/-empfangsgerät in einem durch den ersten Sendeleistungswert bestimmten Funkversorgungsbereich auf. Zudem ist es mit Mitteln zum Speichern einer das zweite Kurzstreckenfunksendegerät/-empfangsgerät kennzeichnenden Information in Verbindung mit dem ersten Sendeleistungswert und Mitteln zum Vergleichen des ersten Sendeleistungswertes mit einem sich von dem ersten Sendeleistungswert unterscheidenden zweiten Sendeleistungswert sowie Mittel zum Ändern des ersten Sendeleistungswertes, die derart ausgestaltet sind, dass bei einer durch die Vergleichsmittel festgestellten Gleichheit die Suche beendet und bei Ungleichheit der erste Sendeleistungswert geändert und dieser den Submitteln für die Suche nach dem zweiten Kurzstreckenfunksendegerät/-empfangsgerät als neuer erster Sendeleistungswert zugeführt wird.

Durch das erfindungsgemäße Kurzstreckenfunksendegerät/-empfangsgerät wird ein wiederholtes Suchen nach zweiten Kurzstreckenfunksendegeräten/-empfangsgeräten ermöglicht, wobei durch die genannten Mittel der gesamte vom erfindungsgemäßen Kurzstreckenfunksendegerät/-empfangsgerät abdeckbare Funkversorgungsbereich derart abgesucht werden kann, dass zweite Kurzstreckenfunksendegeräte/-empfangsgeräte sich auf die Suchanfrage rückmelden können.

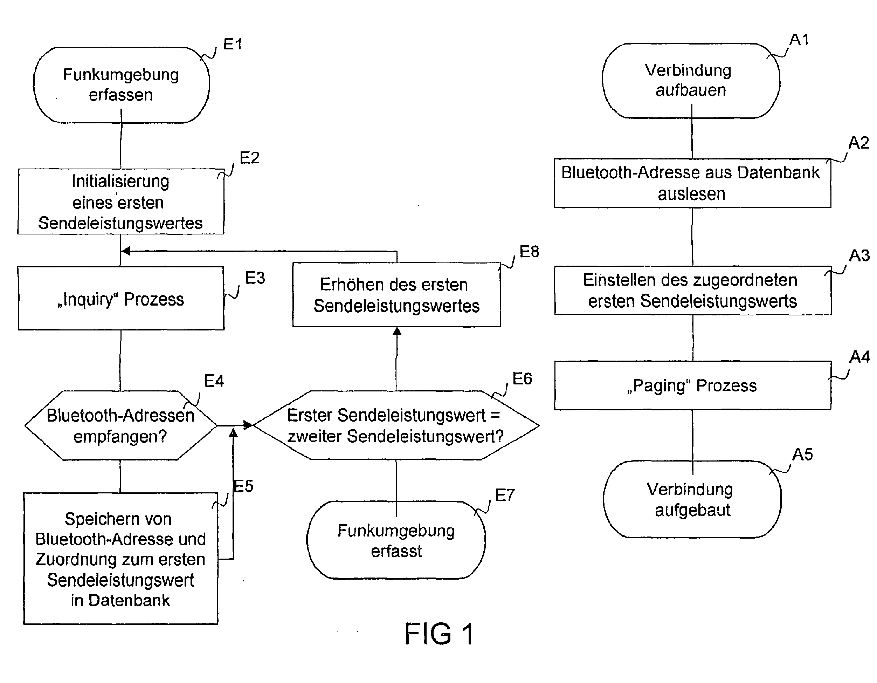

Ein Ausführungsbeispiel der Erfindung wird anhand der FIGUR 1 und FIGFUR 2 erläutert. Davon zeigt:
- FIGUR 1: ein Ablaufdiagramm des erfindungsgemäßen Verfahrens,
- FIGUR 2: ein erfindungsgemäßes Kurzstreckenfunksendegerät/-empfangsgerät.

In der Figur 1 ist ein Ablaufdiagramm eines in einem Funkkommunikationssystem, das gemäß dem "Bluetooth"-Standard ausgestaltet ist, implementierten erfindungsgemäßen Verfahrens dargestellt.

Bei dem Ausführungsbeispiel kommt das Verfahren in einem ersten erfindungsgemäßen gemäß "Bluetooth"-Standard ausgestalteten Kurzstreckenfunksendegerät/-empfangsgerät, im Folgenden mit Device A bezeichnet, zum Einsatz, wobei es sich gemäß Bluetooth beim Device A um ein Kurzstreckenfunksendegerät/-empfangsgerät der Leistungsklasse 1 (Power Class 1, vgl. Bluetooth Specifikation, Version 1B Part A 3), handelt, da für Kurzstreckenfunksendegeräte/-empfangsgeräte dieser Leistungsklasse gemäß "Bluetooth"-Spezifikation ein so genanntes "Power Control" vorgeschrieben wird.

Beim Leistungsmerkmal "Power Control" kann die Sendeausgangsleistung stufenweise zwischen einem unteren Grenzwert (minimale Leistung) Pₘᵢₙ(Pₘᵢₙ < 4dBm) und einem oberen Grenzwert (maximale Leistung) Pₘₐₓ eingestellt werden.

Hierbei liegt eine spezifizierte Schrittweite zwischen zwei aufeinander folgenden Leistungsstufen in einem Werteintervall von 2dBm bis 8dBm, so dass sich eine Anzahl von zirka 4 bis 8 möglichen diskreten Leistungsstufen ergibt. Für Kurzstreckenfunksendegeräte/-empfangsgeräte der ersten Leistungsklasse, wie das Device A des Ausführungsbeispiels, werden im Allgemeinen 4 Stufen als ausreichend für eine Regelung der Sendeleistung - d.h. die Einstellung einer bestimmten Leistungsstufe, welche programmgesteuert, beispielsweise durch Firmware des Devices A, erfolgt - erachtet.

Diese durch die endliche Anzahl von Leistungsstufen begrenzte Regelung definiert das Merkmal, dass das Device A eine variierbare Sendeleistung aufweist.

Kennzeichnend für das erfindungsgemäße Verfahren zum Verbindungsaufbau ist ein Erfassen der Funkumgebung, so dass das Verfahren auch in einem ersten Erfassungsschritt E1 in einem Zustand "Funkumgebung erfassen" beginnt.

In diesen Ausgangszustand E1 kann das Device A einmalig, beispielsweise nach Einschalten des Devices A, in bestimmten Zeitabständen wiederholt und/oder durch ein Ereignis ausgelöst, beispielsweise einem Verbindungswunsch, gelangen.

Aus dem ersten Erfassungsschritt gelangt das Verfahren unmittelbar in einen zweiten Erfassungsschritt E2, bei dem ein Bluetooth-Funkmodul des Devices A auf ein Senden mit einem ersten Sendeleistungswert eingestellt wird, wobei der erste Sendeleistungswert vergleichbar mit einer Variable ist, die mit einem, insbesondere voreingestellten bzw. einstellbaren, Ausgangswert zu Beginn des Verfahrens initialisiert wird.

In einem dritten Erfassungsschritt E3 wird ein Absuchen der Funkumgebung durchgeführt, wobei sich durch den ersten Sendeleistungswert ein Radius eines Sendebereichs ergibt, in dem sich mindestens ein zweites Kurzstreckenfunksendegerät/-empfangsgerät, im Folgenden mit Device B bezeichnet, auf einen im Rahmen des Suchens gesendeten Ruf melden kann.

Die Meldung jedes Device B auf den im Rahmen des Suchvorgangs, der gemäß dem eingangs beschriebenen "Inquiry"-Verfahren durchgeführt wird, abgesandten Ruf beinhaltet die Bluetooth-Adresse des jeweiligen Device B, so dass erfindungsgemäß in einem vierten Erfassungsschritt E4 geprüft wird, ob eine Bluetooth-Adresse empfangen worden ist.

Ist dies der Fall, werden in einem fünften Erfassungsschritt E5 die Bluetooth-Adresse gemeinsam mit einer Referenz des ersten Sendeleistungswertes und/oder der Wert selbst gespeichert, wobei abhängig davon, ob das Verfahren einmalig oder ereignisgesteuert ist, die Speicherung temporär bis zu einem erfolgreichen Aufbau einer Verbindung oder dauerhaft, beispielsweise mit einer Datenbank vergleichbaren Struktur, erfolgt.

Anschließend wird in einem sechsten Erfassungsschritt E6 der aktuelle erste Sendeleistungswert mit einem zweiten Sendeleistungswert, der im Allgemeinen eine obere Grenze eines für die Sendeleistung zulässigen Wertebereiches (Intervall) darstellt, verglichen. Stimmen die beiden Werte im Wesentlichen überein, wird das Verfahren beendet und das Device A gelangt in einem siebten Erfassungsschritt E7 in einen Zustand "Funkumgebung erfasst".

Ergibt der Vergleich E6 keine Übereinstimmung, werden in einem achten Erfassungsschritt E8 der erste Sendeleistungswert erhöht, d.h. die Variable "erster Sendeleistungswert" mit einem neuen Wert belegt und der dritte bis sechste Erfassungsschritt E3..E6 wiederholt.

Erfindungsgemäß erfolgt daher ein mehrfaches Wiederholen der "Inquiry"-Prozedur, wobei beim ersten Inquiry mit einer in der Bluetooth-Spezifikation empfohlenen geringen Sendeleistungsstufe (zwischen 1mW - 2,5mW) begonnen und bei allen folgenden Inquiry's E3 die verwendete Leistungsstufe sukzessive erhöht wird.

Alternativ können auch Leistungsstufen ausgelassen werden, d.h. im achten Erfassungsschritt E8 werden zwei oder mehr diskrete (Wert-)Schritte zum aktuellen ersten Sendeleistungswert addiert.

Das Vorgehen nach dieser Alternative hängt beispielsweise von der Anzahl der möglichen Leistungsstufen ab, um beispielsweise die Gesamtdauer der Erfassungsschritte E1..E8 gering zu halten.

Nach der letzten Wiederholung der "Inquiry"-Prozedur E3, die bei Erreichen maximaler Sendeleistung E6 eintritt, hatten auch die am weitesten entfernten Devices B die Möglichkeit, auf die Prozedur zu antworten.

Der gezielte Verbindungsaufbau zu einem bekannten Bluetooth Device B wird mit dem in der Datenbank abgelegten ersten Sendeleistungswert durchgeführt.

Dazu werden ausgehend von einem Zustand "Verbindung aufbauen" in einem ersten Aufbauschritt A1 in einem zweiten Aufbauschritt A2 die Bluetooth-Adresse des gewünschten Device B sowie die Referenz auf den ersten Sendeleistungswert bzw. der erste Sendeleistungswert ausgelesen und in einem dritten Aufbauschritt A3 das Bluetooth-Funkmodul des Device A auf ein Senden mit dem ermittelten ersten Sendeleistungswert eingestellt.

Anschließend wird in einem vierten Aufbauschritt A4 mit der bekannten Bluetooth-Adresse das eingangs beschriebene "Paging"-Verfahren zum direkten Verbindungsaufbau durchgeführt, so dass das Device A bei erfolgreichem Verbindungsaufbau in einem fünften Aufbauschritt A5 in einen Zustand "Verbindung aufgebaut" gelangt.

Ausgehend von diesem Zustand erfolgt auch der weitere Meldungsverkehr mit dem eingestellten ersten Sendeleistungswert.

Erst nach Empfang von Kommandos zur Erhöhung bzw. Verminderung der Sendeleistung gemäß dem "Power Control" wird im Rahmen des "Power Control" ein anderer erster Sendeleistungswert eingestellt.

Das beschriebene Verfahren ermöglicht somit einen Verbindungsaufbau zu Bluetooth Geräten aller Leistungsklassen im Sendebereich des Devices A.

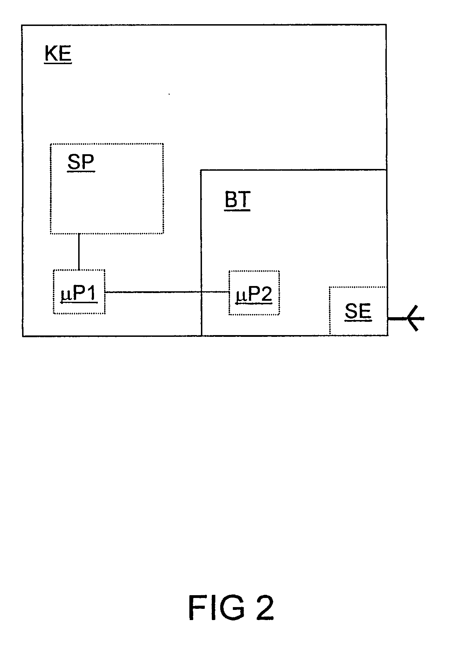

In Figur 2 ist das erfindungsgemäße gemäß "Bluetooth"-Standard ausgestaltete Kurzstreckenfunksendegerät/-empfangsgerät KE dargestellt.

Das Kurzstreckenfunksendegerät/-empfangsgerät KE kann ein Mobilteil, "Personal Digital Assistant" PDA, Laptop oder vergleichbares mobiles Endgerät sein, das zur Realisierung von Funkverbindungen gemäß Bluetooth-Standard mit einem Bluetooth-Funkmodul BT ausgestaltet ist und weist neben Funkmodul BT unter anderem auch einen ersten Mikroprozessor µP1 sowie eine Speichereinrichtung SP auf.

Das dargestellte Bluetooth-Funkmodul BT weist unter anderem einen zweiten Mikroprozessor µP2 sowie eine Funksende-/Funkempfangseinrichtung SE auf.

Der erste Mikroprozessor µP1 kommuniziert zum Anstoßen des erfindungsgemäßen Verfahrens mit dem zweiten Mikroprozessor µP2, so dass dadurch der erste Mikroprozessor µP1 mit dem Funkmodul BT und dem zweiten Mikroprozessor µP2 eine mögliche Realisierung der Mittel zur Initialisierung darstellen.

Mittel zum Suchen nach einem zweiten Kurzstreckenfunksendegerät/-empfangsgerät sind durch das Funkmodul BT, insbesondere der durch den zweiten Mikroprozessor µP2 gesteuerten Funksende-/Funkempfangseinrichtung SE realisiert, während die Mittel zum Speichern durch die Speichereinrichtung SP des Kurzstreckenfunksendegerät/-empfangsgeräts KE gegeben sind.

Die Vergleichsmittel zum Vergleich zweier Sendeleistungswerte sind im ersten Mikroprozessor integriert, während Mittel zum Ändern durch Zusammenwirken des ersten Mikroprozessors µP1 mit dem zweiten Mikroprozessor µP2 realisiert sind.

Alternativ ist es möglich, dass das Bluetooth-Funkmodul BT das Verfahren völlig selbständig durchführt und daher eigene Speichereinrichtungen sowie ausschließlich den zweiten Mikroprozessor µP2 zur Durchführung des erfindungsgemäßen Verfahrens (µP1) nutzt.

Die Erfindung soll aber nicht auf das dargestellte Ausführungsbeispiel beschränkt sein, vielmehr sollen auch zur Umsetzung der möglichen Weiterbildungen notwendige ergänzende bzw. alternative Einrichtungen, insbesondere zur Durchführung der in Figur 1 beschriebenen Weiterbildungen und Alternativen des erfindungsgemäßen Verfahrens, sowie im Rahmen fachmännischen Könnens möglichen Modifikationen mit erfasst sein.

## Patentansprüche

1. Verfahren zum Verbindungsaufbau in einem Kurzstreckenfunkssystem mit mindestens einem ersten Kurzstreckenfunksendegerät/-empfangsgerät, bei dem der Wert einer Sendeleistung variierbar ist, **gekennzeichnet durch** folgende Schritte:
a) Initialisierung eines ersten Sendeleistungswertes und eines zweiten Sendeleistungswertes, die sich unterscheiden (E1, E2),
b) Suchen nach einem zweiten Kurzstreckenfunksendegerät/-empfangsgerät in einem **durch** den ersten Sendeleistungswert bestimmten Funkversorgungsbereich (E3),
c) Speichern einer das zweite Kurzstreckenfunksendegerät/-empfangsgerät kennzeichnenden Information in Verbindung mit dem ersten Sendeleistungswert (E4, E5),
d) Vergleich des ersten Sendeleistungswertes mit dem zweiten Sendeleistungswert (E6),
e) Bei Gleichheit beenden der Suche (E7),
f) Bei Ungleichheit wiederholen der Schritte b) bis d) mit einem geänderten ersten Sendeleistungswert (E8).

2. Verfahren nach Anspruch 1, **dadurch gekennzeichnet, dass** die Werte der Sendeleistung einem abgeschlossenen Werteintervall entstammen.

3. Verfahren nach Anspruch 2, **dadurch gekennzeichnet, dass**
a) mit der Initialisierung als erster Sendeleistungswert ein niedriger Wert des Intervalls, insbesondere unterer Grenzwert des Intervalls, eingestellt wird (E2),
b) als zweiter Sendeleistungswert ein hoher Wert des Intervalls, insbesondere oberer Grenzwert des Intervalls, eingestellt wird (E6),
c) bei Ungleichheit der erste Sendeleistungswert inkrementiert wird (E8).

4. Verfahren nach Anspruch 2, **dadurch gekennzeichnet, dass**
a) mit der Initialisierung als erster Sendeleistungswert ein hoher Wert des Intervalls, insbesondere unterer Grenzwert, eingestellt wird (E2),
b) als zweiter Sendeleistungswert ein niedriger Wert des Intervalls, insbesondere oberer Grenzwert des Intervalls, eingestellt wird (E6),
c) bei Ungleichheit der erste Sendeleistungswert dekrementiert wird (E8).

5. Verfahren nach einem der vorhergehenden Ansprüche, **dadurch gekennzeichnet, dass** die Änderung der ersten Sendeleistung mit einer diskreten Schrittweite erfolgt (E8).

6. Verfahren nach einem der vorhergehenden Ansprüche, **dadurch gekennzeichnet, dass** die diskrete Schrittweite durch eine Sendeleistungsstufe, deren Wert in einem Bereich von 2dBm bis 8dBm liegt, bestimmt wird.

7. Verfahren nach einem der vorhergehenden Ansprüche, **dadurch gekennzeichnet, dass** das Kurzstreckenfunksystem nach dem "Bluetooth-Standard" funktioniert.

8. Verfahren nach Anspruch 7 **dadurch gekennzeichnet, dass** die Suche (E3) nach dem gemäß "Bluetooth-Standard" definierten "Inquiry" Verfahren funktioniert.

9. Verfahren nach einem der Ansprüche 7 oder 8, **dadurch gekennzeichnet, dass**
a) ein Verbindungsaufbau (A1..A5) nach dem gemäß "Bluetooth-Standard" definierten "Paging" (A4) Verfahren funktioniert, wobei
b) eine gemäß "Bluetooth-Standard" definierte Bluetooth-Adresse als die das zweite Kurzstreckenfunksendegerät/-empfangsgerät kennzeichnende Information aus einem Speicher ausgelesen wird (A2) sowie
c) der zugehörige erste Sendeleistungswert ermittelt und vor Beginn des "Paging"-Verfahrens eingestellt wird (A3).

10. Kurzstreckenfunksendegerät/-empfangsgerät (KE), **gekennzeichnet durch**
a) Mittel (µP1, BT, µP2) zur Initialisierung eines ersten Sendeleistungswertes und eines sich von dem ersten Sendeleistungswert unterscheidenden zweiten Sendeleistungswertes,
b) Mittel (BT, µP2, SE) zum Suchen nach einem zweiten Kurzstreckenfunksendegerät/-empfangsgerät in einem durch den ersten Sendeleistungswert bestimmten Funkversorgungsbereich,
c) Mittel (SP) zum Speichern einer das zweite Kurzstreckenfunksendegerät/-empfangsgerät kennzeichnenden Information in Verbindung mit dem ersten Sendeleistungswert,
d) Mittel (µP1) zum Vergleich des ersten Sendeleistungswertes mit dem zweiten Sendeleistungswert,
e) Mittel (µP1, BT, µP2) zum Ändern des ersten Sendeleistungswertes, die derart ausgestaltet sind, dass bei einer **durch** die Vergleichsmittel (µP1) festgestellten Gleichheit die Suche beendet und bei Ungleichheit der erste Sendeleistungswert geändert und dieser den Suchmitteln (BT, µP2, SE) für die Suche nach dem zweiten Kurzstreckenfunksendegerät/-empfangsgerät als neuer erster Sendeleistungswert zugeführt wird.

## Claims

1. Method for establishing a connection in a short-range radio system with at least one first short-range transceiver unit for which the value of a transmission power is variable, identified by the following steps:
a) Initialization of a first transmission power value (E1, E2),
b) Searching for a second short-range transceiver in a radio coverage area (E3) determined by the first transmission power value,
c) Storage of information identifying the second short-range transceiver in connection with the first transmission power value (E4, E5),
d) Comparing the first transmission power value with a second transmission power value (E6),
e) If they are equivalent, ending the search (E7),
f) If they are not equivalent, repeating steps b) through d) with a modified first transmission power value (E8).

2. Method in accordance with claim 1, **characterized in that** the values of the transmission power come from a self-contained range of values.

3. Method in accordance with claim 2, **characterized in that**,
a) with initialization, a low value of the interval, especially the lower limit of the interval, is set as the first transmission power value (E2),
b) a higher value of the interval, especially the upper limit value of the interval, is set as the second transmission power value (E6),
c) on inequality the first transmission power value is incremented (E8).

4. Method in accordance with claim 2, **characterized in that**,
a) with initialization, a high value of the interval, especially the lower limit of the interval, is set as the first transmission power value (E2),
b) a low value of the interval, especially the upper limit value of the interval is set as the second transmission power value (E6),
c) on inequality the first transmission power value is decremented (E8).

5. Method in accordance with one of the previous claims, **characterized in that**, the first transmission power is modified using a discrete increment (E8).

6. Method in accordance with one of the previous claims, **characterized in that**, the discrete increment is determined by a transmission power level for which the value lies within a range of 2dBm to 8dBm.

7. Method in accordance with one of the previous claims, **characterized in that**, the short-range radio system functions in accordance with the Bluetooth Standard

8. Method in accordance with claim 7, **characterized in that** the search (E3) functions in accordance with the "Inquiry" procedure defined in the Bluetooth Standard

9. Method in accordance with one of the claims 7 or 8, **characterized in that**
a) a connection setup (A1..A5) functions in accordance with the "paging" procedure defined in the Bluetooth Standard (A4), in which case
b) a Bluetooth address defined as per the Bluetooth Standard is read out from a memory as the information identifying the second short-range transceiver (A2) and also
c) the associated first transmission power value is determined and set before the beginning of the "paging" procedure (A3).

10. Short-range transceiver (KE), identified by
a) Means (µP1, BT, µP2) for initializing a first transmission power value,
b) Means (BT, µP2, SE) for searching for a second short-range transceiver in a radio coverage area determined by the first transmission power value,
c) Means (SP) for storing information to identify the second short-range transceiver in connection with the first transmission power value,
d) Means for comparing (µP1) the first transmission power value with a second transmission power value,
e) Means (µP1, BT, µP2) for modifying the first transmission power value which is designed in such a way that when equality is established by the comparison means (µP1) the search is ended, and if inequality is established the first transmission power value is modified and directed to the means (BT, µP2, SE) for searching.

## Revendications

1. Procédé d'établissement d'une communication dans un système radio à courte distance, comprenant au moins un premier appareil d'émission/réception radio à courte distance, dans lequel la valeur d'une puissance d'émission est variable, **caractérisé par** les étapes suivantes :
a) initialisation d'une première valeur de puissance d'émission et d'une deuxième valeur de puissance d'émission qui se distinguent (E1, E2),
b) recherche d'un deuxième appareil d'émission/réception radio à courte distance dans une zone de couverture radio déterminée par la première valeur de puissance d'émission (E3),
c) mémorisation d'une information caractérisant le deuxième appareil d'émission/réception radio à courte distance, en conjonction avec la première valeur de puissance d'émission (E4, E5),
d) comparaison de la première valeur de puissance d'émission à la deuxième valeur de puissance d'émission (E6),
e) en cas d'égalité, terminaison de la recherche (E7),
f) en cas d'inégalité, répétition des étapes b) à d) avec une première valeur de puissance d'émission modifiée (E8).

2. Procédé selon la revendication 1, **caractérisé en ce que** les valeurs de la puissance d'émission proviennent d'un intervalle de valeurs fermé.

3. Procédé selon la revendication 2, **caractérisé en ce que**
a) avec l'initialisation, une valeur basse de l'intervalle, notamment une valeur limite inférieure de l'intervalle, est réglée en tant que première valeur de puissance d'émission (E2),
b) une valeur élevée de l'intervalle, notamment une valeur limite supérieure de l'intervalle, est réglée en tant que deuxième valeur de puissance d'émission (E6),
c) la première valeur de puissance d'émission est incrémentée en cas d'inégalité (E8).

4. Procédé selon la revendication 2, **caractérisé en ce que**
a) avec l'initialisation, une valeur élevée de l'intervalle, notamment une valeur limite inférieure, est réglée en tant que première valeur de puissance d'émission (E2),
b) une valeur basse de l'intervalle, notamment une valeur limite supérieure de l'intervalle, est réglée en tant que deuxième valeur de puissance d'émission (E6),
c) la première valeur de puissance est décrémentée en cas d'inégalité (E8).

5. Procédé selon l'une quelconque des revendications précédentes, **caractérisé en ce que** la modification de la première puissance d'émission est réalisée par pas discrets (E8).

6. Procédé selon l'une quelconque des revendications précédentes, **caractérisé en ce que** le pas discret est déterminé par un étage de puissance d'émission, dont la valeur est située dans une plage de 2 dBm à 8 dBm.

7. Procédé selon l'une quelconque des revendications précédentes, **caractérisé en ce que** le système radio à courte distance fonctionne selon la « norme Bluetooth ».

8. Procédé selon la revendication 7, **caractérisé en ce que** la recherche (E3) fonctionne selon le procédé d'« inquiry » défini suivant la « norme Bluetooth ».

9. Procédé selon l'une quelconque des revendications 7 ou 8, **caractérisé en ce que**
a) un établissement de communication (A1 ... A5) fonctionne selon le procédé de « paging » (A4) défini suivant la « norme Bluetooth »,
b) une adresse Bluetooth définie selon la « norme Bluetooth » étant lue à partir d'une mémoire en tant que l'information caractérisant le deuxième appareil d'émission/réception radio à courte distance (A2) ainsi que
c) la première valeur de puissance d'émission correspondante étant déterminée et réglée avant le début du procédé de « paging » (A3).

10. Appareil d'émission/réception radio à courte distance (KE) **caractérisé par**
a) des moyens (µP1, BT, µP2) pour l'initialisation d'une première valeur de puissance d'émission et d'une deuxième valeur de puissance d'émission se distinguant de la première valeur de puissance d'émission,
b) des moyens (BT, µP2, SE) pour rechercher un deuxième appareil d'émission/réception radio à courte distance dans une zone de couverture radio déterminée par la première valeur de puissance d'émission,
c) des moyens (SP) pour mémoriser une information caractérisant le deuxième appareil d'émission/réception radio à courte distance en conjonction avec la première valeur de puissance d'émission,
d) des moyens (µP1) pour comparer la première valeur de puissance d'émission à la deuxième valeur de puissance d'émission,
e) des moyens (µP1, BT, µP2) pour modifier la première valeur de puissance d'émission, qui sont conçus de telle manière qu'en cas d'une égalité constatée par les moyens de comparaison (µP1), la recherche est terminée et qu'en cas d'inégalité, la première valeur de puissance d'émission est modifiée et que celle-ci est amenée aux moyens de recherche (BT, µP2, SE) en tant que nouvelle première valeur de puissance d'émission pour la recherche du deuxième appareil d'émission/réception radio à courte distance.
